# EUROPEAN PATENT SPECIFICATION

(11) **EP 3 109 469 B1**
(45) Date of publication and mention of the grant of the patent: **27.11.2019**
(21) Application number: 16174209.3
(22) Date of filing: 13.06.2016
(51) Int. Cl.: F04B 53/00, F04B 1/04, F16C 17/24, F16C 17/02, F16C 33/10, F02M 59/06, F01M 5/00

(54) **BEARING ASSEMBLY FOR A FLUID PUMP**
LAGERANORDNUNG FÜR EINE FLÜSSIGKEITSPUMPE
ENSEMBLE DE PALIER POUR UNE POMPE À FLUIDE

(30) Priority: 23.06.2015 GB 201511002
(43) Date of publication of application: 28.12.2016
(73) Proprietor: Delphi Technologies IP Limited, St. Michael (BB)
(72) Inventor: PANTENY, Simon R., Rochester, KENT ME1 2AX (GB)
(74) Representative: Delphi France SAS

(56) References cited:
- CN-A- 103 161 771
- DE-A1-102007 011 319
- DE-A1-102010 019 285
- DE-A1-102012 213 497
- JP-A- S6 278 422
- JP-A- H03 199 714
- SU-A1- 1 220 852

## Description

### FIELD OF THE INVENTION

The present disclosure relates to a bearing assembly for use on a drive shaft of a fluid pump. In particular, the invention relates to a bearing assembly for use on a drive shaft of a diesel fuel injection pump or another type of fuel pump. The invention also relates to the fluid pump incorporating the bearing assembly.

### BACKGROUND OF THE INVENTION

JPS6278422 and DE102012213497 disclose bearing assemblies of the prior art. Referring to Figure 1, one type of diesel fuel pump known in the art comprises two radially opposed pumping plungers 10, 12, each of which is arranged to pressurise fuel within a pump chamber 14, 16 defined within a respective pump head 18, 20. The pump heads 18, 20 are mounted on a main pump housing 22. Each of the plungers 10, 12 is driven, in use, by means of a cam form 24 on a drive shaft 25 to pressurise fuel within the associated pump chamber 14, 16. Each plunger 10, 12 is coupled to a respective tappet 26, 28 (or other intermediate drive member) which cooperates with the surface of the cam form 24. As the drive shaft 25 rotates together with the cam form 24, the tappets 26, 28 and their respective plungers 10, 12 are driven outwardly from the drive shaft 25, in phased cyclical motion, to perform a pumping stroke during which the volume of the associated pump chamber 14, 16 is reduced and fuel within the pump chambers is pressurised. Pressurised fuel is then delivered from the pump chambers 14, 16 to the downstream fuel injection system (not shown) through corresponding outlet valves. The plunger and tappet pairs 10, 12, 26, 28 are urged towards the drive shaft under the force of an associated return spring, 30, 32 respectively, to perform a return stroke to complete the pumping cycle. As the volume of the pump chambers 14, 16 is increased, new fuel is drawn into the pump chambers 14, 16, ready for the next pumping stroke. Other pumps may have more or less than two plungers, but operate on a similar principle.

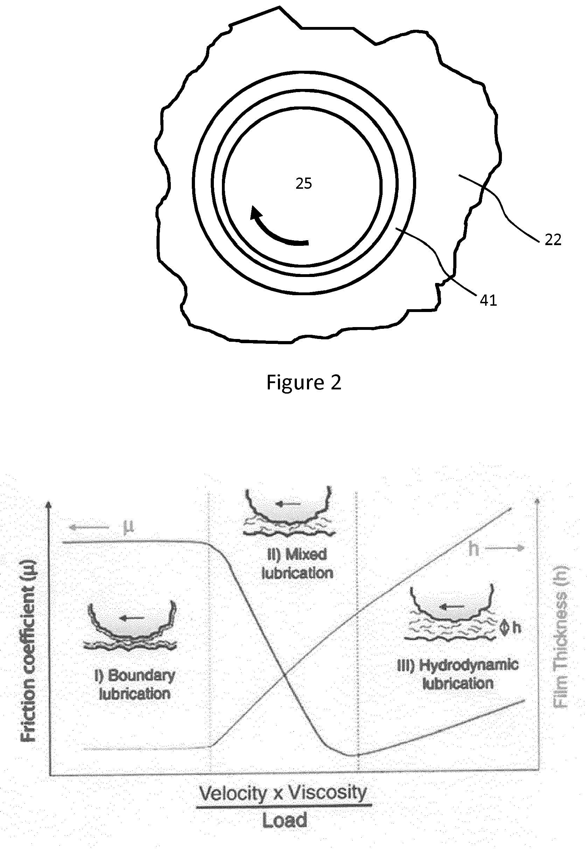

The drive shaft 25 extends through the pump housing 22 and is mounted on a bearing arrangement comprising two separate bearing assemblies 40, 42. A typical bearing assembly 40, 42 is shown in section view in Figure 2. Each bearing assembly 40, 42 (hereinafter referred to as simply a bearing) includes an annular bearing support 41 carrying a bearing component (not shown) which faces the drive shaft 25. The bearing component often takes the form of a layer of material or a coating on the internal surface of the bearing support 41. The drive shaft 25 extends through and rotates within the bearings 40, 42 and is immersed in lubricating fluid, such as lubricating oil from an engine or diesel fuel (or a derivative), which fills a volume defined within the main pump housing 22. The bearings 40, 42 are of annular form, each having an internal diameter slightly greater than the diameter of the drive shaft 25 so as to define a gap between the external surface of the drive shaft 25 and the internal surface of the relevant bearing component. Lubricating fluid fills or partially fills the gap between the bearings 40, 42 and the drive shaft 25 and lubricates the bearings, in use, as the drive shaft rotates. A seal assembly 46 is provided at an end of the pump housing 22 to prevent the lubricating fluid from leaking from the pump.

In each assembly, the friction (including contact and viscous losses) between the surface of the bearing component and the surface of the drive shaft 25 determines how well the bearing performs (i.e. the efficiency of the bearing). The friction between the surfaces is dependent on the viscosity (µ), the load on the bearing relating to friction and the velocity of rotation of the drive shaft 25. This is defined by the well known equation referred to as 'Petroff's equation'. For fluid containing bearings, the Stribeck curve (see Figure 3) describes three lubrication regimes between surfaces: boundary lubrication, mixed lubrication and hydrodynamic lubrication. Ideally, the bearing operates in the mixed lubrication regime across all speed and load conditions, at the minimum of the friction curve, so that friction between the surfaces is minimised across all velocity and load conditions. However, in practice, the efficiency of the bearing varies due to the range of different velocity and load conditions, which give rise to a different friction value.

In attempting to optimise the efficiency of the bearings 40, 42 across a range of velocity and load conditions, it is inevitable that compromises are made so that the bearings do not operate at maximum efficiency under all conditions. In other words, there are operating conditions when the efficiency of the bearing is not optimum, leading to friction losses and inefficiency.

It is one object of the invention to provide a bearing assembly which alleviates or overcomes the aforementioned problem.

### STATEMENTS OF INVENTION

Aspects and embodiments of the invention are set out in the accompanying claims.

According to one aspect of the invention, there is provided a bearing assembly for receiving a drive shaft of a fluid pump, the bearing assembly comprising a bearing component which defines a bearing surface for the drive shaft, the drive shaft and the bearing surface together defining a fluid volume for receiving lubricating fluid, in use, to lubricate contact between the bearing surface and the drive shaft, the bearing assembly further comprising a temperature modification device for varying the temperature of fluid in the fluid volume (either by increasing or reducing the temperature thereof) so as to vary the viscosity of the fluid in the fluid volume and thereby to vary the friction or other energy loss between the bearing surface and the drive shaft across a range of operating conditions.

The fluid pump may be a fuel pump, such as that used in a diesel fuel injection system. The lubricating fluid need not be the same type of fluid as that which the pump is used to pressurise, and may be a lubricating oil not a fuel.

Reference to "friction" is intended to mean a resistance to two surfaces moving relative to one another, which gives rise to energy losses i.e. a force that resists the relative motion or tendency to such motion of two bodies or substances.

Reference to "operating conditions" is intended to refer to the rotational speed of the drive shaft and the load applied to the drive shaft, which are conditions which influence the friction coefficient between the bearing surface and the drive shaft. The temperature modification device is operable to vary the viscosity of the fluid across a range of temperatures sufficient to provide a minimum coefficient of friction between the bearing component and the drive shaft across substantially the full range of velocity and load operating conditions for the fuel pump. Typically, the range of temperatures is between 90°C and 115°C, with intermittent use of the pump around temperatures as high as 130°C. The full range of temperatures for pump operation is typically -40 °C to 150 °C.

The bearing assembly typically includes a bearing support which supports the bearing component. The bearing support is typically press-fitted into a pump housing, and the bearing component is typically deposited or otherwise fitted (e.g. press-fitted) on to the bearing support e.g. the bearing component may take the form of a low friction material fitted on to a metallic backing support.

In one embodiment, the temperature modification device is embedded within or integrally formed with the bearing component and/or the bearing support, and more typically within the bearing support.

The temperature modification device extends around only a part of the circumference of the bearing support. Conveniently, the part of the circumference is substantially diametrically opposed to a point of maximum load on the bearing assembly. This ensures the temperature modification device is protected from the maximum loads applied to the bearing assembly through the plungers of the fuel pump.

In another embodiment, the temperature modification device is mounted on an external surface of the bearing support. The temperature modification device extends around only a part of the external circumference of the bearing support. In this embodiment, the temperature modification device is not located in direct contact with, and in close proximity to, the fluid within the volume, but a sufficient heating/cooling effect may still be achieved across a full range of velocity and load conditions for some pump applications.

A plurality of temperature modification devices may be provided, either embedded within the bearing component and/or bearing support or carried on the external circumference of the bearing support. For example, a plurality of temperature modification devices may be arranged at equi-angularly spaced locations around the external circumference of the bearing support.

The bearing assembly may further comprise means for measuring the temperature of the fluid in the fluid volume (e.g. a thermocouple device), so that the temperature modification device may be operable in response to the measured temperature so as to vary the viscosity of the fluid in response thereto.

Each of the temperature modification devices may include an electrical heating component or a thermoelectric device.

According to another aspect of the invention, there is provided a fluid pump comprising a bearing assembly of the previous aspect of the invention, wherein the fluid pump includes the drive shaft and wherein the fluid volume defined between the drive shaft and the bearing surface is variable around the circumference of the bearing assembly. It will be appreciated that the fluid that is pumped by the pump (e.g. fuel) need not be the same as the lubricating fluid filling the fluid volume between the drive shaft and the bearing assembly.

It is beneficial to arrange the temperature modification device diametrically opposite a point of minimum thickness of the fluid volume, so that the device is located at a point at which the load (and thus the friction, hydrodynamic or otherwise) on the bearing is a maximum.

According to another aspect, there is provided a method of modifying the viscosity of fluid within a bearing assembly for a drive shaft of a fluid pump, the method comprising measuring the temperature of fluid within a fluid volume between the bearing assembly and the drive shaft, comparing the measured temperature with a pre-determined optimum temperature selected in accordance with a velocity/load operating condition of the fluid pump, and controlling a temperature modification device in response to the measured temperature so as to achieve the pre-determined temperature for the fluid.

The pre-determined optimum temperature is selected in accordance with the Petroff equation i.e. friction coefficient being proportional to the product of rotational velocity and viscosity divided by load ([velocity x viscosity]/load) and the proportional relationship between temperature and viscosity.

Within the scope of this application it is expressly envisaged that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

One or more embodiments of the invention will now be described, by way of example only, with reference to the accompanying drawings, in which:
Figure 1 is a schematic diagram of a known fuel pump with which a bearing assembly of the invention may be used;
Figure 2 is a section view of the drive shaft and the bearing assembly in Figure 1;
Figure 3 is a 'Stribeck Curve' to illustrate the three phases of lubrication between two surfaces in close contact with a lubricant between;
Figure 4 is a section view of the drive shaft and the bearing assembly of a first embodiment of the invention;
Figure 5 is a schematic diagram of a thermoelectric device which may form an integral part of the bearing assembly in Figure 4, when operating as a cooling device;
Figure 6 is a section view of the drive shaft and the bearing assembly of an embodiment of the invention; and
Figures 7 to 10 are section views of the drive shaft and the bearing assembly of examples not forming part of the invention.

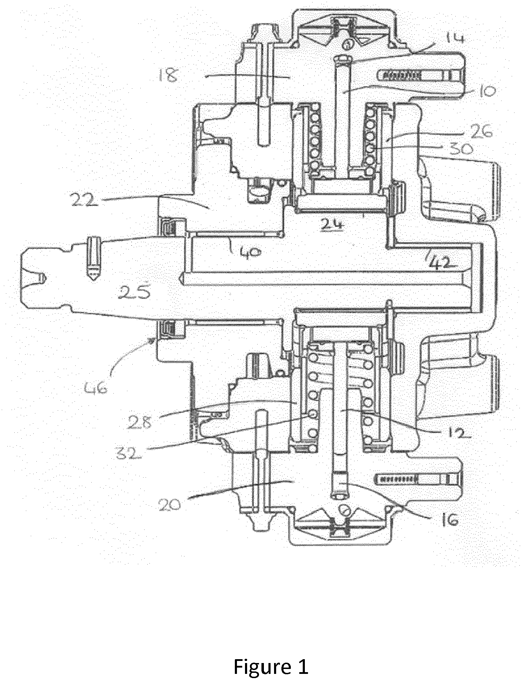

The bearing assembly of the present invention is intended for use in a fuel pump of the type described previously with reference to Figures 1 and 2. The bearing assembly is particularly suitable for use in a diesel fuel pump such as that used in a compression ignition internal combustion engine, but is also applicable to other pump applications, and including gasoline fuel pumps.

Referring to the well-known Stribeck curve in Figure 3, three regimes describe the lubrication between the bearing surface and the surface of the drive shaft; (i) boundary lubrication, (ii) mixed lubrication, and (iii) hydrodynamic lubrication. The friction between the surfaces depends on the velocity of the rotating drive shaft, the viscosity of the fluid between the surfaces and the load applied to the drive shaft. It is desirable for the friction between the surfaces to be minimised for all operating conditions. Because different pump operating conditions will result in variable loads and velocities, it is therefore desirable to be able to vary the viscosity of the fluid between the surfaces to ensure that lubrication occurs in the mixed lubrication regime under all circumstances, and ideally at the point of minimum friction.

One means of doing this is to replace the fluid between the surfaces to ensure the fluid that is present has a viscosity which is appropriate to the prevailing operating conditions at the time. However, to keep track on the operating conditions in this way is not feasible in many applications, due to the constantly changing drive conditions. The invention therefore proposes to vary the viscosity of the fluid by adjusting its temperature in response to the varying drive conditions, thereby to maintain friction between the surfaces at approximately the optimum (minimum) point across all operating (speed/load) conditions.

Most liquids become less viscous as the temperature is increased. By changing the viscosity of the fluid, it is therefore possible to shift the lubrication regime along the Stribeck curve to a position of lower, and ideally lowest, friction for that domain of operation.

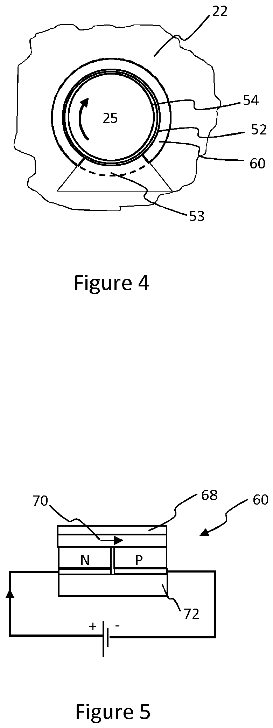

Referring to Figure 4, one embodiment of the present invention takes the form of a bearing assembly 50 including a bearing support 53 and a bearing component 52 receiving a drive shaft 25, of the type shown in Figure 1. The bearing component 52 takes the form of a layer of material applied to the bearing support 53, and is that component of the bearing assembly 50 which faces the drive shaft 25. The bearing component 52 is a layer of material fitted to or otherwise applied to the internal surface of the bearing support 53. The bearing support 53 is of annular form having an internal diameter slightly greater than the diameter of the drive shaft 25 so that the bearing component 52 defines a gap 54 between the external surface of the drive shaft 25 and the internal surface of the bearing component 52. The gap 54 defines a fluid volume for receiving a lubricating fluid, typically engine oil or a mixture of diesel fuel and engine oil. The bearing component 52 is typically very thin and is supported on an outer bearing support 53 which may be formed from steel to provide strength to the bearing assembly 50. The external circumference of the outer bearing support 53 is identified by the dashed line in Figure 4.

The bearing assembly 50 may be of the active flow type, where lubricating fluid within the fluid volume 54 is actively pumped to recirculate fluid within the volume, or may be of the passive flow type where the natural movement of the bearing component 52 relative to the drive shaft 25 is the only cause of displacement of the lubricating fluid

The bearing component 52 is typically formed from a polymer material. In an active flow type pump assembly the temperature is likely to be lower than in a passive flow system, so that the material of the bearing component 52 can be chosen for its friction/long term durability properties. For example the bearing component 52 in this type of arrangement may typically be formed from PEEK (polyether ether ketone). In a passive flow type pump assembly, the material of the bearing component 52 must be stronger or more robust because it is likely to experience tougher (e.g. higher temperature) conditions. For example, in such arrangements the bearing component 52 may be formed from a material such as PTFE (polytetrafluoroethylene). In other bearing assemblies (not shown) the assembly is a three-layer structure, including a bearing support 53 and a bearing component 52 in the form of a sliding layer, together with a third layer in the form of a running-in layer provided specifically for the purpose of providing the bearing surface for the drive shaft when the pump is being 'run-in'.

During the pumping cycle, the drive shaft 25 experiences a variable load as the plungers are driven to perform a pumping stroke, moving outwardly from the drive shaft 25 to reduce the volume of their respective pump chambers to pressurise fuel within the pump chambers which is then delivered from the pump. During a plunger return stroke, the plungers are urged inwardly towards the drive shaft 25 and fuel is drawn into the pump chambers ready for the next pumping stroke. The point of maximum load applied to the bearing assembly 50 is at the base of the assembly (in the orientation shown in Figure 4) and it is at this point that the thickness of the gap 54 between the bearing component 52 and the drive shaft 25 is a minimum. For the purpose of this specification, the region of the fluid volume 54 of the bearing assembly 50 at the point of maximum load is referred to as the 'fluid region of minimum fluid thickness' and the region of the fluid volume at the point of minimum load is referred to as the 'fluid region of maximum fluid thickness.

The bearing assembly 50 further includes a temperature modification device 60. The temperature modification device 60 is integrated within the bearing assembly 50, and serves to provide a heating or cooling effect to fluid within the gap 54 between the bearing component 52 and the drive shaft 25, depending on the temperature of the fluid. In this way the viscosity of the fluid can be modified so as to ensure the friction between the surfaces is minimised across a wide range of operating conditions, in accordance with the pre-determined relationship between friction coefficient, viscosity, velocity of rotation and applied load.

As contact friction and viscous losses in the lubricating fluid generate heat, it is likely that the temperature modification device 60 will need to lower, rather than raise, the temperature to reduce the viscosity of fluid within the gap 54 between the drive shaft 25 and the bearing component 52.

In the embodiment of Figure 4, the temperature modification device 60 forms an integral part of the bearing support 53, and extends through only a portion of the bearing support 53, typically that portion covering around three quarters (i.e. 270 degrees) of the full circumference of the bearing support 53. The region of the bearing support 53 which is not embedded with a temperature modification device 60 is that region which lies adjacent to the region of minimum fluid thickness of the fluid volume 54, being that region which experiences the greatest applied load throughout the pumping cycle. This provides a degree of protection for the temperature modification device 60, in use, which is therefore located away from the point of maximum loading.

The temperature modification device may be a thermoelectric device 60 to which a voltage is applied in dependence on the operating conditions (e.g. applied load and velocity of rotation of the drive shaft 25) so as to vary the thermal output of the device. The thermoelectric device is embedded within the bearing component material 52. Electrical contacts attached to the thermoelectric device are configured so that an electrical voltage of varying magnitude and polarity can be applied across the device to vary the current flow through the device. The magnitude and polarity of the voltage across the thermoelectric device gives rise to a temperature difference across the device. If a positive polarity voltage is applied, for example to give rise to a current flow from the n-type region to the p-type region, the device acts as a cooling device, whereby a negative temperature difference is established across the device to draw heat from the fluid within the gap 54. If a negative polarity voltage is applied, for example to give rise to a current flow from the p-type region to the n-type region, the device acts as a heating device whereby a positive temperature difference is established across the device and heat output from the device is transferred to the fluid within the gap 54 to raise its temperature. It will be appreciated that in another semiconductor device the application of a negative polarity voltage may give rise to a current flow from the p-type region to the n-type region, and vice versa.

Figure 5 shows a schematic view of a typical thermoelectric device 60 operating as a cooling device for a surface 68 to be cooled. The cooled surface 68 may represent one of several things. It either represents the interface between the thermoelectric device 60 and the bearing component 52 or the interface between the thermoelectric device 60 and the bearing support 53, depending on the position of the thermoelectric device 60. The region 70 represents the thermoelectric material across which the voltage is applied to generate a thermal difference across the material. Heat from the fluid is dissipated through the device to a heat sink 72.

A thermocouple (not shown) is embedded within the bearing assembly 50 to monitor the temperature of the fluid within the gap 54 between the drive shaft 25 and the bearing assembly 50. In response to the temperature measurement as determined by the thermocouple, the voltage across the thermoelectric device 60 is controlled so as to modify the viscosity of the fluid so as to give the required friction between the bearing component 52 and the drive shaft 25, as determined by the Petroff equation discussed previously. For this purpose the pump assembly has an associated controller (not shown) which has a data memory storing pre-calibrated data relating to applied load, velocity of rotation of the drive shaft and viscosity. Pre-calibrated data is also stored relating the viscosity of the lubricating fluid to the temperature.

In use, for any load and velocity condition, there is a desirable viscosity for the fluid which will ensure that the bearing operates with the lowest friction in the mixed lubrication regime. Once this velocity has been determined, the thermoelectric device 60 can be controlled, in response to the temperature measurement from the thermocouple, to ensure that the temperature of the fluid matches that which achieves the desired viscosity. If it is necessary to cool the fluid, so as to increase the viscosity, a voltage of one polarity is applied across the thermoelectric device 60 to extract heat from the fluid. If it is necessary to decrease the viscosity, a voltage of the opposite polarity is applied to the thermoelectric device 60 to increase the temperature of the fluid. By varying the viscosity of the fluid in this way, it is possible to ensure that the lubrication regime between the bearing assembly 50 and the drive shaft 25 remains approximately at the point of lowest friction, so that losses are reduced and the efficiency of the bearing is optimised for all load conditions.

In an active flow system, the fluid flow across the bearings is forced and a pressure differential is set up across the bearing assembly 50. In a passive flow system the pressure differential across the bearing assembly 50 is lower and so natural heat dissipation, as a result of the fluid flow rate, is reduced. The provision of the temperature modification device 60 allows the temperature of the fluid to be controlled in a precise manner, in either a passive system or an active system, so that the desired temperature (and hence viscosity) of the fluid can be selected accurately.

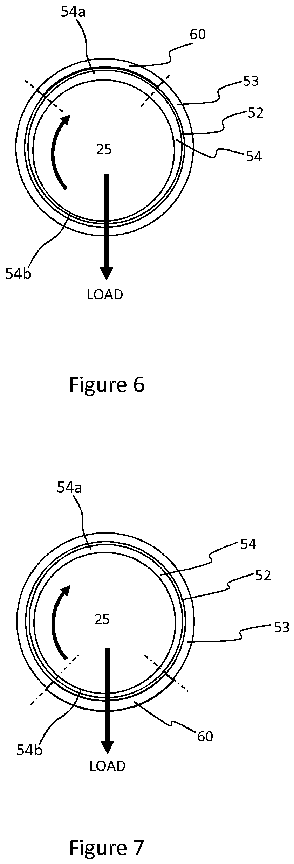

Figure 6 shows an alternative embodiment of the invention in which a temperature modification device in the form of a thermoelectric device 60 extends around a reduced portion (around 90 degrees) of the bearing support 53 so that it lies adjacent to the fluid region 54a of maximum fluid thickness. The location for the temperature modification device 60 is selected to be diametrically opposed to the point of maximum loading on the drive shaft (as indicated by the arrow A) so as to protect the device 60 as far as possible from the applied load. The region of minimum fluid thickness is identified at 54b. The impact on the temperature modification which can be achieved with the temperature modification device 60 in this position may be reduced because the shear losses are lower in this region. Thus, the viscosity of the fluid supporting the load will not be influenced as easily as for the fluid under the load point (where shear loss is expected to be greatest). However, for some pump applications the range of temperature variation which can be achieved is still sufficient to allow the friction between the bearing component 52 and the drive shaft 25 to be optimised across the full range of operating conditions (speed and load).

Figure 7 shows an example not forming part of the invention in which the temperature modification device 60 is located adjacent to the fluid region 54b of minimum fluid thickness (i.e. at the position of maximum loading).

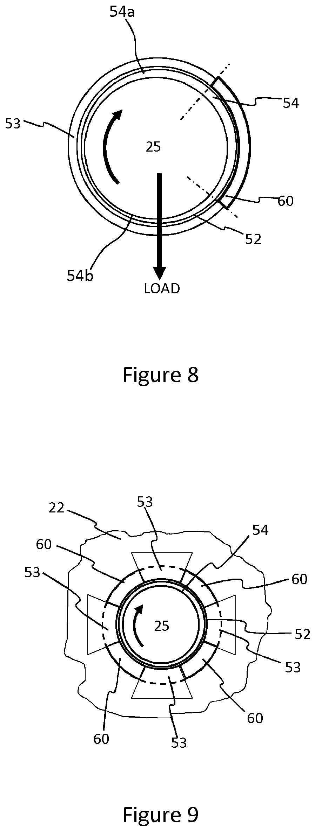

A further example not forming part of the invention is shown in Figure 8 in which the thermoelectric device 60 is located part way between the fluid region 54a of maximum fluid thickness and the fluid region 54b of minimum fluid thickness.

Figure 9 shows another example not forming part of the invention in which four temperature modification devices in the form of thermoelectric devices 60 are arranged at equi-angularly spaced locations around the circumference of the bearing assembly, within the bearing support 53. Each device 60 takes the form of a layer of thermoelectric material and the dashed lines represent the outer circumference of the bearing support 53, as in previous examples. In practice a greater or lesser number of devices 60 may be included, depending on the extent of heating/cooling required to give the required viscosity range. This embodiment ensures the heating or cooling effect is applied more evenly to the fluid volume 54 and is particularly well suited to the passive flow arrangements where fluid within the fluid volume 54 remains relatively static compared to forced flow arrangements. Another embodiment (not shown) incorporates a temperature modification device 60 which is embedded within the bearing support 53 around the full circumference.

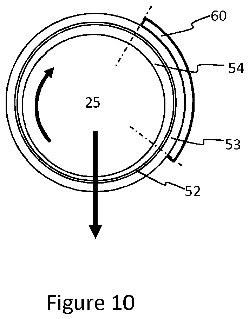

In a further example not forming part of the invention, as shown in Figure 10, the temperature modification device 60 is not embedded within the bearing support 53, but is carried externally to the support 53 so that it does not make direct contact with fluid within the fluid volume 54. Although the device 60 is not in direct contact with the fluid, in some applications the location of the device 60 behind the bearing support 53 may still provide the required temperature modification and provides the advantage that the device does not experience directly the load from the plungers.

In stop/start conditions it may be beneficial to cool the fluid within the fluid volume 54 so as to raise the viscosity of the fluid to a high value so that it can better support the static load of the plungers. Alternatively, in high speed conditions, the viscous losses are important and an increase in temperature would result in a reduced viscosity and associated loss.

As an alternative to using a thermoelectric device 60 to provide the means for heating or cooling fluid within the fluid volume, one or more electrical heater element or device (not shown) may be used. The electrical heater element may include fine filaments embedded within a thermally conductive but electrically insulating matrix, and may be arranged in any of the configurations described for the previous embodiments. In one particular embodiment the bearing support may include an electrically insulating material and the sinter used to support the bearing component on the bearing support may be connected to form the heating element itself. By supplying current to the electrical heater element, heat (generated by electrical resistance) is dissipated by the heater and transferred to the fluid within the fluid volume to modify the temperature.

It will be appreciated by a person skilled in the art that the invention could be modified to take many alternative forms without departing from the scope of the appended claims.

## Claims

1. A bearing assembly (50) for a drive shaft (26) of a fluid pump, the bearing assembly (50) comprising:
a bearing component (52) which defines a bearing surface for the drive shaft (25), in use, the drive shaft (25) and the bearing surface together defining a fluid volume (54, 54a, 54b) for receiving lubricating fluid, in use, to lubricate contact between the bearing surface and the drive shaft (25), the bearing assembly further comprising a temperature modification device (60) for varying the temperature of fluid in the fluid volume (54, 54a, 54b) so as to vary the viscosity of the fluid in the fluid volume (54, 54a, 54b), thereby to vary the friction between the bearing surface and the drive shaft (25) and wherein,
the bearing assembly includes a bearing support (53) which supports the bearing component (52), **characterised in that**,
the temperature modification device (60) extends around only a part of the circumference of the bearing support (53) and wherein,
the part of the circumference includes a region substantially diametrically opposed to a point of maximum load on the bearing assembly (50).

2. The bearing assembly as claimed in claim 1, wherein the bearing component (52) is fitted or applied to the bearing support (53).

3. The bearing assembly as claimed in claim 1 or claim 2, wherein the temperature modification device (60) is embedded within the bearing support (53).

4. The bearing assembly as claimed in claim 1 or claim 2, wherein the temperature modification device (60) is mounted externally to the bearing support (53).

5. The bearing assembly as claimed in any of claims 1 to 4, comprising a plurality of temperature modification devices (60).

6. The bearing assembly as claimed in any of claims 1 to 5, further comprising means for measuring the temperature of the fluid in the fluid volume (54, 54a, 54b).

7. The bearing assembly as claimed in claim 6, wherein the temperature modification device (60) is operable in response to the measured temperature so as to vary the viscosity of the fluid in response to the measured temperature.

8. The bearing assembly as claimed in any of claims 1 to 7, wherein the temperature modification device (60) includes an electrical heating component.

9. The bearing assembly as claimed in any of claims 1 to 7, wherein the temperature modification device (60) includes a thermoelectric device.

10. A fluid pump comprising a bearing assembly as claimed in any of claims 1 to 9, wherein the fluid pump includes the drive shaft (25) and wherein the fluid volume (54, 54a, 54b) defined between the drive shaft (25) and the bearing surface is of variable thickness around the circumference of the bearing assembly (50).

11. The fluid pump as claimed in claim 10, wherein the temperature modification device (60) is positioned diametrically opposite a point of minimum thickness of the fluid volume.

## Patentansprüche

1. Lageranordnung (50) für eine Antriebswelle (26) einer Fluidpumpe, wobei die Lageranordnung (50) aufweist:
eine Lagerkomponente (52), die eine Lageroberfläche für die Antriebswelle (25) definiert, wobei in Betrieb die Antriebswelle (25) und Lageroberfläche zusammen ein Fluidvolumen (54, 54a, 54b) zur Aufnahme von Schmierfluid definieren, um in Betrieb einen Kontakt zwischen der Lageroberfläche und der Antriebswelle (25) zu schmieren, wobei die Lageranordnung weiter eine Temperaturmodifikationsvorrichtung (60) aufweist zum Variieren der Temperatur von Fluid in dem Fluidvolumen (54, 54a, 54b), um die Viskosität des Fluids in dem Fluidvolumen (54, 54a, 54b) zu variieren, um dadurch die Reibung zwischen der Lageroberfläche und der Antriebswelle (25) zu variieren, und wobei
die Lageranordnung einen Lagerträger (53) umfasst, der die Lagerkomponente (52) trägt, **dadurch gekennzeichnet, dass**
sich die Temperaturmodifikationsvorrichtung (60) nur um einen Teil des Umfangs des Lagerträgers (53) erstreckt, und wobei
der Teil des Umfangs einen Bereich umfasst, der im Wesentlichen diametral einem Punkt einer maximalen Belastung auf der Lageranordnung (50) gegenüberliegt.

2. Die Lageranordnung gemäß Anspruch 1, wobei die Lagerkomponente (52) an der Lagerstütze (53) angebracht oder aufgebracht ist.

3. Die Lageranordnung gemäß Anspruch 1 oder Anspruch 2, wobei die Temperaturmodifikationsvorrichtung (60) in die Lagerstütze (53) eingebettet ist.

4. Die Lageranordnung gemäß Anspruch 1 oder Anspruch 2, wobei die Temperaturmodifikationsvorrichtung (60) extern zu dem Lagerträger (53) angebracht ist.

5. Die Lageranordnung gemäß einem der Ansprüche 1 bis 4, die eine Vielzahl von Temperaturmodifikationsvorrichtungen (60) aufweist.

6. Die Lageranordnung gemäß einem der Ansprüche 1 bis 5, die weiter Mittel zum Messen der Temperatur des Fluids in dem Fluidvolumen (54, 54a, 54b) aufweist.

7. Die Lageranordnung gemäß Anspruch 6, wobei die Temperaturmodifikationsvorrichtung (60) in Reaktion auf die gemessene Temperatur betriebsfähig ist, um die Viskosität des Fluids in Reaktion auf die gemessene Temperatur zu variieren.

8. Die Lageranordnung gemäß einem der Ansprüche 1 bis 7, wobei die Temperaturmodifikationsvorrichtung (60) eine elektrische Heizkomponente umfasst.

9. Die Lageranordnung gemäß einem der Ansprüche 1 bis 7, wobei die Temperaturmodifikationsvorrichtung (60) eine thermoelektrische Vorrichtung umfasst.

10. Eine Fluidpumpe, die eine Lageranordnung gemäß einem der Ansprüche 1 bis 9 aufweist, wobei die Fluidpumpe die Antriebswelle (25) umfasst und wobei das Fluidvolumen (54, 54a, 54b), das zwischen der Antriebswelle (25) und der Lageroberfläche definiert ist, um den Umfang der Lageranordnung (50) herum eine variable Dicke hat.

11. Die Fluidpumpe gemäß Anspruch 10, wobei die Temperaturmodifikationsvorrichtung (60) diametral gegenüber einem Punkt minimaler Dicke des Fluidvolumens positioniert ist.

## Revendications

1. Assemblage formant palier (50) pour un arbre d'entraînement (26) d'une pompe à fluide, l'assemblage formant palier (50) comprenant :
un composant de palier (52) qui définit une surface de palier pour l'arbre d'entraînement (25), en utilisation, l'arbre d'entraînement (25) et la surface de palier définissant ensemble un volume à fluide (54, 54a, 54b) pour recevoir de l'huile de lubrification, en utilisation, afin de lubrifier le contact entre la surface de palier et l'arbre d'entraînement (25), l'assemblage formant palier comprenant en outre un dispositif de modification de température (60) pour faire varier la température du fluide dans le volume à fluide (54, 54a, 54b) de manière à faire varier la viscosité du fluide dans le volume à fluide (54, 54a, 54b), et faire varier ainsi la friction entre la surface de palier et l'arbre d'entraînement (25),
et dans lequel l'assemblage formant palier inclut un support de palier (53) qui supporte le composant de palier (52),
**caractérisé en ce que**
le dispositif de modification de température (60) s'étend autour d'une partie seulement de la circonférence du support de palier (53), et **en ce que**
la partie de la circonférence inclut une région sensiblement diamétralement opposée à un point de charge maximum sur l'assemblage formant palier (50).

2. Assemblage formant palier selon la revendication 1, dans lequel le composant de palier (52) est monté ou appliqué sur le support de palier (53).

3. Assemblage formant palier selon la revendication 1 ou 2, dans lequel le dispositif de modification de température (60) est noyé à l'intérieur du support de palier (53).

4. Assemblage formant palier selon la revendication 1 ou 2, dans lequel le dispositif de modification de température (60) est monté à l'extérieur sur le support de palier (53).

5. Assemblage formant palier selon l'une quelconque des revendications 1 à 4, comprenant une pluralité de dispositifs de modification de température (60).

6. Assemblage formant palier selon l'une quelconque des revendications 1 à 5, comprenant en outre des moyens pour mesurer la température du fluide dans le volume à fluide (54, 54a, 54b).

7. Assemblage formant palier selon la revendication 6, dans lequel le dispositif de modification de température (60) est capable de fonctionner en réponse à la température mesurée, de manière à faire varier la viscosité du fluide en réponse à la température mesurée.

8. Assemblage formant palier selon l'une quelconque des revendications 1 à 7, dans lequel le dispositif de modification de température (60) inclut un composant chauffant électrique.

9. Assemblage formant palier selon l'une quelconque des revendications 1 à 7, dans lequel le dispositif de modification de température (60) inclut un dispositif thermoélectrique.

10. Pompe à fluide comprenant un assemblage formant palier tel que revendiqué selon l'une quelconque des revendications 1 à 9, dans laquelle la pompe à fluide inclut l'arbre d'entraînement (25) et dans laquelle le volume à fluide (54, 54a, 54b) défini entre l'arbre d'entraînement (25) et la surface de palier a une épaisseur variable autour de la circonférence de l'assemblage formant palier (50).

11. Pompe à fluide selon la revendication 10, dans laquelle le dispositif de modification de température (60) est positionné diamétralement à l'opposé d'un point d'épaisseur minimum du volume à fluide.
